(19) Europäisches Patentamt
European Patent Office
Office européen des brevets

(11) Veröffentlichungsnummer: **0 270 758 B1**

# (12) EUROPÄISCHE PATENTSCHRIFT

(45) Veröffentlichungstag der Patentschrift: **04.09.91**

(51) Int. Cl.⁵: **F16D 65/22**, F16D 55/22, F16D 51/22

(21) Anmeldenummer: **87114196.6**

(22) Anmeldetag: **29.09.87**

(54) **Simplex-Trommelbremse.**

(30) Priorität: **06.12.86 DE 3641797**

(43) Veröffentlichungstag der Anmeldung:
**15.06.88 Patentblatt 88/24**

(45) Bekanntmachung des Hinweises auf die
Patenterteilung:
**04.09.91 Patentblatt 91/36**

(84) Benannte Vertragsstaaten:
**DE FR GB IT NL**

(56) Entgegenhaltungen:
EP-A- 0 066 075     DE-C- 380 962
DE-C- 432 317      FR-A- 924 636
FR-A- 1 330 322     US-A- 2 337 069

(73) Patentinhaber: **Warstein Achsen GmbH
Industriegebiet Heidfeld 1-4
W-4793 Büren(DE)**

(72) Erfinder: **Rollfinke, Gerhard
Eschenweg 16
W-4788 Warstein-Suttrop(DE)**

(74) Vertreter: **Patentanwälte Dipl.-Ing. Alex Stenger Dipl.-Ing. Wolfram Watzke Dipl.-Ing.
Heinz J. Ring
Kaiser-Friedrich-Ring 70
W-4000 Düsseldorf 11(DE)**

## Beschreibung

Die Erfindung betrifft eine Simplex-Trommelbremse nach dem Oberbegriff des Anspruchs 1.

Simplex-Trommelbremsen sind bekannt, deren Zuspannung durch Verdrehen eines S-förmigen Nokkens mit vorzugsweise evolventenförmigen Flanken erfolgt. Zur Übertragung der Spreizkräfte auf die Bremsbacken, die drehbeweglich an ihrem Festpunkt abgestützt sind, sind Rollen zwischengeschaltet, die drehbar gelagert sind. Derartige Trommelbremsen werden wegen ihrer Robustheit, leichten Instandsetzung, verhältnismäßig geringen Anfälligkeit gegenüber Reibwertschwankungen und Umempfindlichkeit auch bei höheren Betriebstemperaturen vorzugswiese in schwere Nutzfahrzeuge, Baumaschinen und Anhänger eingesetzt, die über eine Kraftquelle in Form einer Druckluft- oder Hydraulikanlage verfügen. Die Funktion dieser Trommelbremsen ist problemlos, wenn die Drehrichtung des S-förmigen Nockens mit der Drehrichtung der Bremstrommel übereinstimmt. Erfordert jedoch die Fahrzeugbauart eine Drehrichtung des Nokkens entgegen der Drehrichtung der Bremstrommel oder unterliegt das Fahrzeug durch seine Einsatzbedingungen einem Wechsel der Fahrtrichtungen, so entstehen durch die Kinematik der Zuspannelemente und elastischen Verformungen von Bremsbacken, Bremstrommel und Lagerungen des Nockens Schwingungen, die sich als Dröhnen, Rupfen oder Rattern bemerkbar machen und zur Zerstörung von Bauelementen, wie Bremszylindern, Druckstangen und Nachstelleinrichtungen, führen.

Ferner sind Bremsen bekannt, bei denen ein nockenartiges Zuspannelement vorgesehen ist, das bei Verdrehung über Stößel die Spreizkräfte auf Kolben überträgt, die in entsprechenden Zylindern gelagert sind und die Kräfte tangential zu den Bremsbackenenden weiterleiten. Zwar weisen derartige mit tangential eingeleiteten Spreizkräften arbeitende Bremsen keine Empfindlichkeit gegen Drehrichtungswechsel auf, jedoch sind die Kolbenführungen gegen Verschmutzung empfindlich und müssen deshalb durch elastische Dichtelemente geschützt werden. Derartige Dichtelemente sind nur in einem begrenzten Temperaturbereich einsetzbar und werden bei hoch beanspruchten Bremsen mit entsprechender Erwärmung unbrauchbar.

Aus der DE-C-380 962 ist eine Trommelbremse mit Kniehebelzuspannung der Bremsbacken bekannt. Die Kniehebel sind über Lenker an Zwischenhebeln angelenkt, die ihrerseits gegeneinander federvorgespannt sind. Die Zwischenhebel stehen über Rollen mit ihren freien Enden mit einem S-förmigen Nocken in Eingriff, der zum Spreizen der Zwischenhebel und damit zum Andrücken der Bremsbacken an die Bremstrommel über die Kniehebel dient. Hierbei ändert sich je nach Verschleißzustand der Winkel der Kniehebel und damit das Verhältnis Zuspannkraft zur Bremskraft, d.h. der Kennwert der Bremse. Die Bremsbacken sind sehr flach und deshalb biegeweich, weshalb die Zuspannung an beiden Enden der Bremsbacken über die Kniehebel erfolgt. Außerdem ist eine Abstützung der Umfangskraft über Zapfen und Führungen in der Mitte der Bremsbacken vorgesehen und daher ohne Einfluß auf den Kennwert der Bremse. Außerdem lassen die biegeweiche Bremsbacke in Verbindung mit der Abstützung in der Mitte keinen exakt vorauszubestimmenden Verschleiß des Bremsbelagmaterials zu. Die Zwischenhebel sind Übertragungselemente, die auf die vollen Zuspannkräfte und damit entsprechend kräftig ausgelegt sein müssen.

Aus der DE-C-432 317 ist eine sogenannte Servo-Bremse bekannt, deren Bremsbacken schwimmend gelagert sind, d.h. daß sich die Bremsbacken je nach Fahrtrichtung an einem Stützorgan abstützen, während sie an der Gegenseite über eine schwimmende Nachstelleinrichtung verbunden sind. Aus Zwischenhebeln ist ein ebenfalls schwimmendes Gelenkviereck gebildet, das bei wechselnder Drehrichtung den Bremsbacken bis zur Anlage am Stützorgan folgt. Die aus der Reibung zwischen einem die Spreizkräfte übertragenden Nocken und den Zwischenhebeln resultierenden radialen Kräfte werden über die Zwischenhebel und deren Anlenkungen an den Bremsbacken in letztere eingeleitet.

Aufgabe der Erfindung ist es, eine Simplex-Trommelbremse nach dem Oberbegriff des Anspruchs 1 zu schaffen, bei der die Zwischenhebel im wesentlichen nur Zug- und Druckkräften, dagegen praktisch keiner Biegebeanspruchung ausgesetzt sind.

Diese Aufgabe wird entsprechend dem kennzeichnenden Teil des Anspruchs 1 gelöst.

In die Enden der Bremsbacken, die der Lagerung entgegengesetzt sind, werden zumindest nur noch vorwiegend Tangentialkräfte eingeleitet, während die Reaktionskräfte aus der Kinematik von Nocken und Rollen und die Reibung über Zwischenhebel, die jeweils zwischen einer Rolle und einer Bremsbacke angeordnet sind, im Bereich der Bremsbackenabstützung in den Bremsbackenträger eingeleitet werden. Durch diese Maßnahme erfolgt eine Entkopplung von Bremsbacke und Zuspannung.

Die Zwischenhebel sind nicht als Übersetzungselement mit ausgeprägtem Kraft- und Lastarm und entsprechender Biegebeanspruchung ausgelegt, sondern nur als Stützelement für die aus der Nockenzuspannung resultierenden Reaktionskräfte, die auf die Zwischenhebel im wesentlichen als Zug- und Druckkräfte wirken. Für die Zuspannkräfte in tangentialer Richtung dient nur jeweils das freie Zwischenhebelende als Übertragungsglied ohne ausgeprägte Biegebeanspruchung auf den gesamten Zwischenhebel. Die Zwischenhebel dienen nur dazu, die unerwünschten Kraftkomponenten aus der Zuspannkraft in die Nähe der Bremsbackendrehpunkte abzuleiten. Die Dimensionierung der Zwischenhebel kann deshalb entsprechend leicht sein.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

Fig. 1 zeigt eine Simplex-Trommelbremse.

Fig. 2 zeigt die untere Hälfte einer Simplex-Trommelbremse, die gegenüber Fig. 1 modifiziert ist.

Fig. 3 zeigt ebenfalls eine gegenüber Fig. 1 modifizierte Simplex-Trommelbremse.

Fig. 4 und 5 zeigen einen vergrößerten Ausschnitt der Zuspannung der Simplex-Trommelbremse ohne und mit Zwischenhebeln.

Fig. 6 und 7 zeigen zwei weitere Ausführungsbeispiele einer Simplex-Trommelbremse.

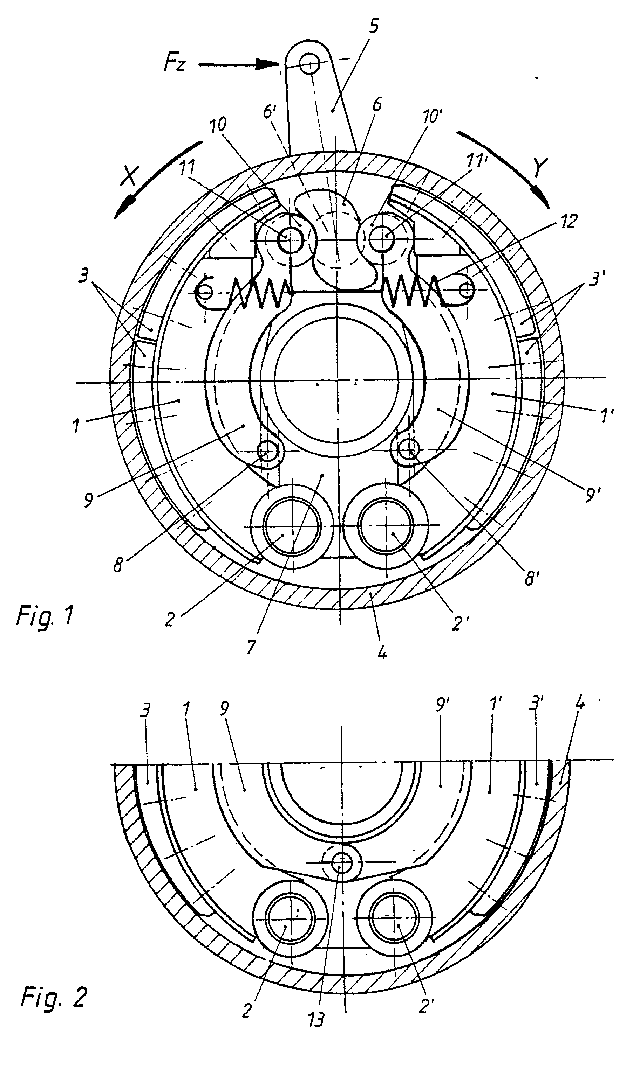

Die in Fig. 1 dargestellte Simplex-Trommelbremse umfaßt zwei Bremsbacken 1, 1', die jeweils an einem Lagerbolzen 2, 2' angelenkt sind und Bremsbeläge 3, 3' tragen. Zur Betätigung der Bremse werden die Bremsbeläge 3, 3' mit dem Innenumfang einer Bremstrommel 4 durch Betätigen eines Bremshebels 5 gebracht, an dem die Kraft Fz eines nicht dargestellten Druckluftzylinders oder einer anderen Kraftquelle angreift und diesen in Zuspannrichtung Z verdreht. Durch das Verdrehen des Bremshebels 5 wird ein S-förmiger Nocken 6 mit evolventenförmigen Flanken, der auf einer Nockenwelle 6' angeordnet ist, an der der Bremshebel 5 angreift, um den gleichen Drehwinkel wie der Bremshebel 5 gedreht. Die Nockenwelle 6' des Nocken 6 ist in einem Bremsträger 7 gelagert, der außerdem benachbart zu den Lagerbolzen 2, 2' Zapfen 8, 8' trägt, an denen Zwischenhebel 9, 9' mit einem Ende angelenkt sind, während sie an ihren freien Enden Rollen 10, 10' tragen, die mit den Flanken des Nockens 6 in Eingriff stehen. Die Rollen 10, 10' steigen auf den evolventenförmigen Flanken des Nockens 6 entsprechend dem Drehwinkel und dem wirksamen Nockenradius $l_N$ bei Betätigung der Bremse auf. Die Rollen 10, 10' übertragen die Bewegung über Rollenbolzen oder angedrehte Lagerzapfen 11, 11' auf die Zwischenhebel 9, 9' und von dort auf die mittels einer Zugfeder 12 gegeneinander vorgespannten Bremsbacken 1, 1', so daß die Bremsbeläge 3, 3' in Reibschluß mit der Bremstrommel 4 gelangen.

Dreht sich die Bremstrommel 4 in Richtung Y (Uhrzeigersinn von Fig. 1), so ist

Zuspannungsrichtung Z = Drehrichtung Y.

Dreht sich die Bremstrommel 4 in Richtung X (Gegenuhrzeigersinn von Fig. 1), so ist

Zuspannrichtung Z $\neq$ Drehrichtung X.

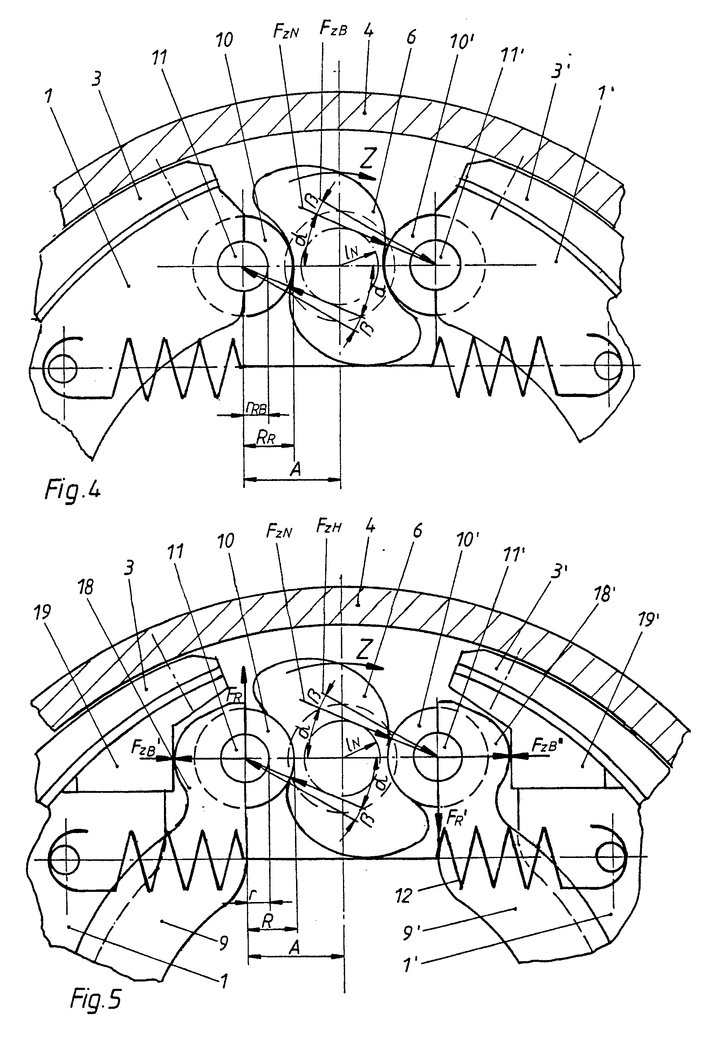

Bei fehlenden Zwischenhebeln 9, 9' entsprechend Fig. 4 weicht die Kraftrichtung der Spreizkraft von der idealen tangentialen Richtung um folgende Winkel ab:

$$\sin \alpha = \frac{l_N}{A} \quad \text{und} \quad \text{tg } \beta = \mu_{R_B} \cdot \frac{r_{R_B}}{R_R} .$$

Die Winkel $\alpha$ und $\beta$ addieren sich hierbei. Während der Winkel $\beta$ annähernd konstant bleibt, ändert sich $\alpha$ mit dem Zuspannweg beim Verschleiß des Bremsbelages. Dabei wird das Maß A (Fig. 4) größer und $\alpha$ kleiner. Die an den Bremsbakken 1, 1' schräg angreifenden Kräfte $F_{ZB}$ bewirken jeweils an der Bremsbacke 1' ein elastisches Stauchen und an der anderen Bremsbacke 1 ein elastisches Strecken. Werden dagegen die Zwischenhebel 9, 9' vorgesehen, so werden auf die freien Bremsbackenenden benachbart zum Nocken 6 nur tangentiale Kräfte $F_{ZB'}$, $F_{ZB''}$ übertragen, während die Komponenten $F_R$ und $F_{R'}$ der Kräfte $F_{ZH}$ von den Zwischenhebeln 9, 9' übernommen werden, die sie in die Anlenkung und damit in den Bremsträger 7 einleiten.

Bei der in Fig. 2 dargestellten Ausführungsform sind die Zwischenhebel 9, 9' an einem gemeinsamen Zapfen 13 gelagert, der an dem Bremsträger 7 angeordnet ist.

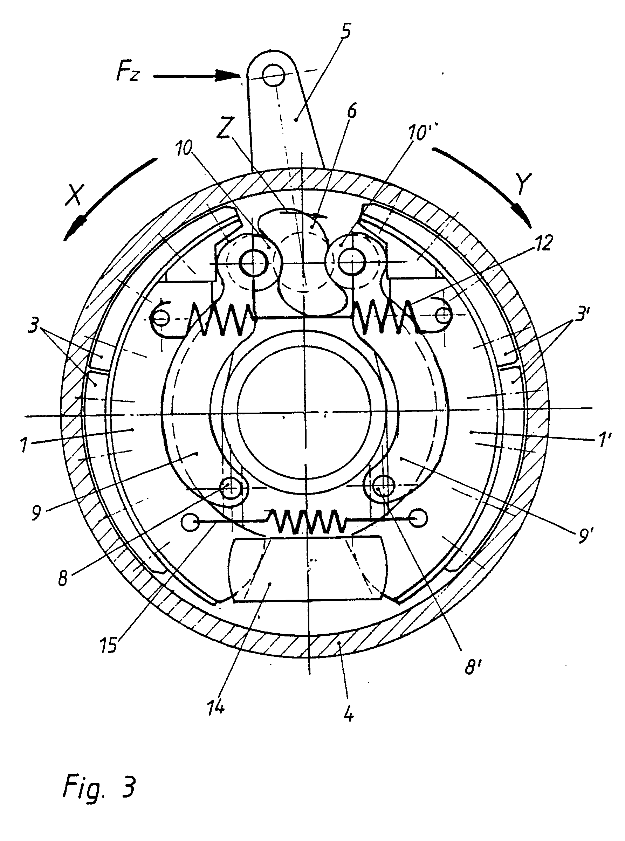

Bei der in Fig. 3 dargestellten Ausführungsform ist eine feste Abstützung 14 an dem Bremsträger 7 vorgesehen, die die Bremsbacken 1, 1' gleitend abstützt. Hierbei werden auch die durch die Abstützung 14 abgestützten benachbarten freien gerundeten Enden der Bremsbacken 1, 1' durch eine Zugfeder 15 gegeneinander vorgespannt.

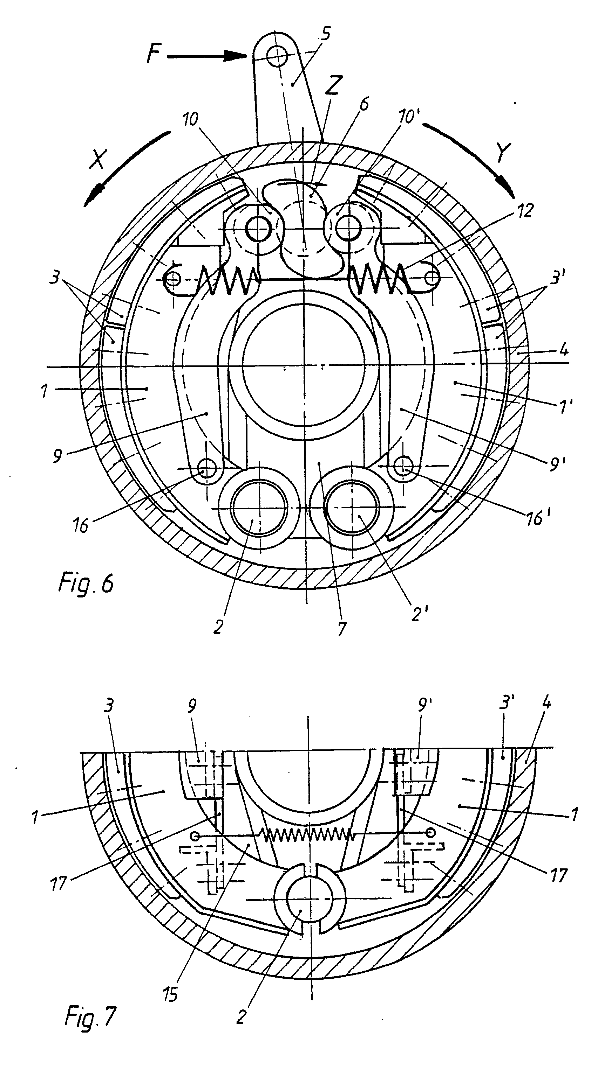

Bei der in Fig. 6 dargestellten Ausführungsform sind die Zweischenhebel 9, 9' an den Bremsbacken 1,

1' selbst über Bolzengelenke 16, 16' angelenkt.

Bei der in Fig. 7 dargestellten Ausführungsform sind die Bremsbacken 1, 1' an einem Lagerbolzen 2 drehbar abgestützt, während die Zwischenhebel 9, 9' über Federelemente 17, 17', beispielsweise Federblätter, mit den Bremsbacken 1, 1' nahe deren Festpunkt verbunden sind. Die Anlenkung der Zwischenhebel 9, 9' an den Bremsbacken 1, 1' über die Federelemente 17, 17' ist derart vorzunehmen, daß zwar eine Federung um eine Achse in Richtung Bremsbackendrehpunkt jedoch keine Längenänderung zwischen Lagergabel für die Rollen 10, 10' und Befestigung an den Bremsbacken 1, 1' zugelassen wird.

In den Ausführungsbeispielen sind die Zwischenhebel 9, 9' an ihren freien Ende benachbart zum Nocken 6 beispielsweise gabelförmig zur Aufnahme der Rollen 10, 10' ausgebildet. Wie dargestellt kann hierbei die Lagerung halbschalenartig zur Aufnahme der Rollen 10, 10', die angedrehte Lagerzapfen 11, 11' aufweisen, offen ausgebildet sein. Die Lagerung kann aber auch geschlossene Augen haben, durch die Bolzen geführt sind, auf denen die Rollen 10, 10' gelagert sind.

Die dem Nocken 6 abgewandten Seiten der gabelförmigen Enden der Zwischenhebel 9, 9' können ballige Druckflächen 18, 18' aufweisen, wodurch die Spreizkräfte $F_{ZB}$ auf ebene Druckflächen von Druckstücken 19, 19' der Bremsbacken 1, 1' übertragen werden. Die Druckflächen 18, 18' können jedoch auch eben sein, während die Druckstücke 19, 19' an den Bremsbacken 1, 1' ballig ausgeführt sind.

Durch entsprechende Neigung der ebenen Druckflächen der Druckstücke 19, 19' (die in Fig. 5 parallel dargestellt sind) kann erreicht werden, daß diese beispielsweise erst bei zur Hälfte verschlissenen Bremsbelägen 3, 3' parallel sind. Durch eine derartige Ausbildung kann die Kennung der Trommelbremse je nach den Erfordernissen beeinflußt werden.

## Patentansprüche

1. Simplex-Trommelbremse für Fahrzeuge, insbesondere Nutzfahrzeuge, Baumaschinen und Anhänger und mit wechselnden Fahrtrichtungen, mit gegenüber einem Bremsträger (7) in Richtung auf eine Bremstrommel (4) verschwenkbar angeordneten, Bremsbeläge (3, 3') tragenden und gegeneinander federvorgespannten Bremsbacken (1, 1') und einem über einen Bremshebel (5) betätigbaren S-förmigen Nocken (6), der vorzugsweise evolventenförmige Flanken aufweist, wobei zwischen den Flanken des Nockens und den freien Enden von am Bremsträger (7) angelenkten Zwischenhebeln (9, 9') drehbare Rollen (10, 10') gelagert sind, dadurch gekennzeichnet, daß die Bremsbacken (1, 1') feste Backendrehpunkte (2, 2', 14) aufweisen, nahe zu denen die Zwischenhebel (9, 9') angelenkt sind, wobei sich die freien Enden der Zwischenhebel (9, 9') benachbart zu den freien Enden der Bremsbacken (1, 1') befinden und die Zwischenhebel (9, 9') an den dem Nocken (6) abgekehrten Seiten an den Bremsbacken (1, 1') anliegen.

2. Simplex-Trommelbremse nach Anspruch 1, dadurch gekennzeichnet, daß die Zwischenhebel (9, 9') über Bolzengelenke (8, 8'; 13; 16, 16') angelenkt sind.

3. Simplex-Trommelbremse nach Anspruch 1 oder 2, dadurch gekennzeichnet, daß die Zwischenhebel (9, 9') an einem gemeinsamen Drehpunkt (13) am Bremsträger (7) gelagert sind.

4. Simplex-Trommelbremse nach Anspruch 1 oder 2, dadurch gekennzeichnet, daß die Zwischenhebel (9, 9') an den Bremsbacken (1, 1') drehbeweglich angelenkt sind.

5. Simplex-Trommelbremse nach Anspruch 4, dadurch gekennzeichnet, daß die Zwischenhebel (9, 9') über Federelemente (17, 17'), vorzugsweise Blattfedern, angelenkt sind.

6. Simplex-Trommelbremse nach einem der Ansprüche 1 bis 5, dadurch gekennzeichnet, daß im Anlagebereich zwischen Zwischenhebel (9, 9') und Bremsback (1, 1') eine ballige Druckfläche (18, 18') eines Teils (9, 9' oder 1, 1') mit einer ebenen Druckfläche (19, 19') des anderen Teils (1, 1' oder 9, 9') in Eingriff steht.

7. Simplex-Trommelbremse nach einem der Ansprüche 1 bis 6, dadurch gekennzeichnet, daß die Zwischenhebel (9, 9') gabelförmige freie Enden aufweisen, in denen die Rollen (10, 10') gelagert sind.

8. Simplex-Trommelbremse nach Anspruch 7, dadurch gekennzeichnet, daß die Zwischenhebel (9, 9') halbschalenartig offene Lager für die Rollen (10, 10') besitzen.

4

9. Simplex-Trommelbremse nach einem der Ansprüche 6 bis 8, dadurch gekennzeichnet, daß die ebenen Druckflächen (19, 19') geneigt zueinander angeordnet sind.

10. Simplex-Trommelbremse nach einem der Ansprüche 1 bis 9, dadurch gekennzeichnet, daß die Bremsbacken (1, 1') je an einem oder an einem gemeinsamen Lagerbolzen (2, 2') oder gleitend an einer festen Abstützung (14) gelagert bzw. abgestützt sind.

## Claims

1. A simplex drum brake for vehicles, more particularly commercial vehicles, building machines and trailers, and having varying directions of travel, comprising brake shoes (1, 1') disposed to pivot towards a brake drum (4) relatively to a brake carrier (7), said brake shoes bearing brake linings (3, 3') and being spring-biased relatively to one another, and an S-shaped cam (6) which is adapted to be operated via a brake lever (5) and which preferably has involute flanks, rotatable rollers (10, 10) being mounted between the flanks of the cam and the free ends of intermediate levers (9, 9') articulated on the brake carrier (7), characterised in that the brake shoes (1, 1') have fixed fulcra (2, 2', 14), near which the intermediate levers (9, 9') are articulated, the free ends of the intermediate levers (9, 9') being situated adjacent the free ends of the brake shoes (1, 1') and the intermediate levers (9, 9') engaging the brake shoes (1, 1') at the sides remote from the cam (6).

2. A simplex drum brake according to claim 1, characterised in that the intermediate levers (9, 9') are articulated by way of pivot pins (8, 8'; 13; 16, 16').

3. A simplex drum brake according to claim 1 or 2, characterised in that the intermediate levers (9, 9') are mounted on the brake carrier (7) at a common fulcrum (13).

4. A simplex drum brake according to claim 1 or 2, characterised in that the intermediate levers (9, 9') are articulated on the brake shoes (1, 1') so as to be rotationally movable.

5. A simplex drum brake according to claim 4, characterised in that the intermediate levers (9, 9') are articulated by way of spring elements (17, 17'), preferably leaf springs.

6. A simplex drum brake according to any one of claims 1 to 5, characterised in that a spherical pressure surface (18, 18') of one part (9, 9' or 1, 1') engages a flat pressure surface (19, 19') of the other part (1, 1' or 9, 9') in the zone of contact between the intermediate lever (9, 9') and a brake shoe (1, 1').

7. A simplex drum brake according to any one of claims 1 to 6, characterised in that the intermediate levers (9, 9') have forked free ends in which the rollers (10, 10') are mounted.

8. A simplex drum brake according to claim 7, characterised in that the intermediate levers (9, 9') have bearings open in the form of half-shells for the rollers (10, 10').

9. A simplex drum brake according to any one of claims 6 to 8, characterised in that the flat pressure surfaces (19, 19') are disposed at an inclination to one another.

10. A simplex drum brake according to any one of claims 1 to 9, characterised in that the brake shoes (1, 1') are each mounted or supported on one bearing pin (2, 2') or jointly on a bearing pin (2, 2') or slidingly on a fixed support (14).

## Revendications

1. Frein à tambour du type simplex, notamment pour véhicules utilitaires, engins de travaux publics et remorques nécessitant des changements de sens de marche, comportant des mâchoires de frein (1, 1') qui sont montées de manière à pouvoir pivoter par rapport à un support de frein (7) en direction d'un tambour de frein (4), qui portent des garnitures de frein (3, 3') et qui sont précontraintes par ressort l'une en direction de l'autre, ainsi qu'une came (6) en forme de S pouvant être actionnée par un levier de frein (5) et présentant des flancs de préférence en forme de développante, des galets rotatifs (10, 10') étant montés entre les flancs de la came et les extrémités libres de leviers intermédiaires (9,

5

9') articulés sur le support de frein (7), caractérisé en ce que les mâchoires de frein (1, 1') présentent des points fixes de rotation de mâchoires (2, 2', 14) à proximité desquels sont articulés les leviers intermédiaires (9, 9'), les extrémités libres des leviers intermédiaires (9, 9') étant situées au voisinage des extrémités libres des mâchoires de frein (1, 1') et les leviers intermédiaires (9, 9') s'appliquant par leurs côtés éloignés de la came (6), contre les mâchoires de frein (1, 1').

2. Frein à tambour du type simplex selon la revendication 1, caractérisé en ce que les leviers intermédiaires (9, 9') sont articulés au moyen d'axes d'articulation (8, 8'; 13; 16, 16').

3. Frein à tambour du type simplex selon la revendication 1 ou 2, caractérisé en ce que les leviers intermédiaires (9, 9') sont montés sur le support de frein (7) au niveau d'un point de rotation commun (13).

4. Frein à tambour du type simplex selon la revendication 1 ou 2, caractérisé en ce que les leviers intermédiaires (9, 9') sont articulés en rotation sur les mâchoires de frein (1, 1').

5. Frein à tambour du type simplex selon la revendication 4, caractérisé en ce que les leviers intermédiaires (9, 9') sont articulés au moyen d'éléments à ressort (17, 17'), de préférence des lames de ressort.

6. Frein à tambour du type simplex selon l'une des revendications 1 à 5, caractérisé en ce que dans la zone d'appui entre levier intermédiaire (9, 9') et mâchoire de frein (1, 1'), une surface de pression bombée (18, 18') d'une pièce (9, 9' ou 1, 1') coopère avec une surface de pression plane (19, 19') de l'autre pièce (1, 1' ou 9, 9').

7. Frein à tambour du type simplex selon l'une des revendications 1 à 6, caractérisé en ce que les leviers intermédiaires (9, 9') présentent des extrémités libres en forme de chape dans lesquelles sont montés les galets (10, 10').

8. Frein à tambour du type simplex selon la revendication 7, caractérisé en ce que les leviers intermédiaires (9, 9') comportent des paliers en forme de demi-coques ouvertes pour les galets (10, 10').

9. Frein à tambour du type simplex selon l'une des revendications 6 à 8, caractérisé en ce que les surfaces de pression planes (19, 19') sont disposées de manière inclinée l'une par rapport à l'autre.

10. Frein à tambour du type simplex selon l'une des revendications 1 à 9, caractérisé en ce que les mâchoires de frein (1, 1') sont montées chacune sur un axe d'articulation (2, 2') ou sur un axe d'articulation commun (2), ou bien s'appuient de manière glissante sur un appui fixe (14).

Fig. 1

Fig. 2

Fig. 3

Fig.4

Fig.5

Fig. 6

Fig. 7